# EUROPEAN PATENT SPECIFICATION

(11) **EP 4 457 972 B1**
(45) Date of publication and mention of the grant of the patent: **16.09.2026**
(21) Application number: 21970153.9
(22) Date of filing: 30.12.2021
(51) Int. Cl.: H04L 9/32, G06Q 50/18, G06Q 30/018, G06Q 10/10, G06F 21/64, H04L 9/40

(54) **A MOBILE ELECTRONIC SIGNATURE SYSTEM**
MOBILES ELEKTRONISCHES UNTERSCHRIFTSSYSTEM
SYSTÈME DE SIGNATURE ÉLECTRONIQUE MOBILE

(43) Date of publication of application: 06.11.2024
(73) Proprietor: Cloudpeer Global Teknoloji A. S., Kadikoy / Istanbul (TR)
(72) Inventor: OZTURK, Gurkan, Pendik/Istanbul (TR); SEN, Murat, Pendik/Istanbul (TR)
(74) Representative: Soylu, Ekrem
(86) International application number: PCT/TR2021/051641
(87) International publication number: WO 2023/128908

(56) References cited:
- WO-A1-2019/237570
- CN-A- 108 092 779
- US-A1- 2001 002 485
- US-A1- 2007 208 944
- US-A1- 2007 208 944
- US-A1- 2010 169 651
- US-A1- 2013 132 718
- US-A1- 2019 097 811
- US-A1- 2020 280 444
- US-A1- 2021 312 561
- US-B1- 10 277 400

## Description

### TECHNICAL FIELD

The invention relates to a mobile electronic signature system that enables the electronic signing of electronic documents in service systems.

### BACKGROUND OF THE INVENTION

In the literature, electronic signatures (e-Signatures) are secure electronic signatures created based on a Qualified Electronic Certificate (QEC). Electronic signatures are used in mobile devices, and banking transactions, other financial applications, various applications, and transactions made to public institutions, electronic correspondence and contracts, electronic communications, insurance transactions, and corporate resource planning applications. In this context, applications are being developed to provide electronic signatures in mobile devices through mobile applications. In the literature, developments can be made for determining the suitability of the service by creating an electronic document in the banking service with the provision of electronic signatures in mobile banking systems, making the electronic signature available in the mobile application, and examining the document in the system's infrastructure of the mobile application.

TW201947497A relates to a financial services application system comprising: an electronic application signature device for filling in e-form and signing the e-signature, a counter terminal, coupling with the electronic application signature device for transmitting e-form and financial services information required for financial services application, and, system server, coupling with the counter terminal for controlling the operation of the financial services application system.

US2007/208944 and US2019/097811 are relevant prior art documents.

### BRIEF DESCRIPTION OF THE INVENTION

The invention is defined by the independent claims. Preferred embodiments are defined by the dependent claims.

The object of the invention is to develop an electronic signature system that can be run as a mobile device application, at least partially reducing users' needs such as installing software on their mobile devices, connecting signature hardware to their mobile devices to sign electronic documents.

In order to achieve the above objectives, the invention relates to a mobile electronic signature system comprising a first client device with a mobile application installed, which provides access to one or more service systems via an internet-accessible network server; a signature server that provides an electronic signature containing one or more electronic certificates transmitted to the mobile application when the first client device accesses the service system; a second client device that receives an electronic document transmitted from the signature server to the first client device; the signature server configured to send a signed electronic document and a time stamp containing the electronic certificate when an electronic signature is added to the electronic document in the first client device, characterized in that the signature server configured to verify a signature file from the first client device to provide appropriate identity verification according to the electronic certificate, and queries the electronic signature authority in the signature file by accessing one or more signature circuits containing electronic signature permissions suitable for signature certificates recorded in a server memory unit, and conduct a verification process that provides a query about the changes made with the addition of the electronic signature by comparing the electronic document with the signed electronic document; the second client device includes a mobile service is configured to send the signature file through the signature server upon determining the success at the verification process. As a result, an electronic signature is provided in a mobile system as a mobile device application where the signing of electronic documents is done in an electronic environment. In addition, an electronic signature system with increased security against malicious third parties in service services through controls in the verification process on the signature server is also provided by at least partially reducing the need for intermediate hardware and software in signing electronic documents and facilitating document signing on the mobile system. Here, the first client device can be, for example, a mobile device used by a bank customer; while the second client device can be a service provider like a bank.

In a preferred embodiment of the invention, the first client device is a mobile device having a mobile memory unit and a processing unit connected to provide bidirectional data flow with the mobile memory unit. As a result, the processor unit of the first client device is enabled to receive an electronic document and, when receiving a signing command on the device, modify the electronic document to include the electronic signature, thus creating a signed electronic document.

In a preferred embodiment of the invention, the mobile memory unit is configured to store electronic certificates received from the signature server in the first client device. This way, the certificate data received on the first client device can be stored and retained.

In a preferred embodiment of the invention, the processing unit is configured to enable the reading and writing of data in the mobile memory unit. As a result, it becomes possible for the first client device to add a timestamp to the signed electronic document containing the electronic certificate and to create a signature file, which can then be sent to the signature server.

In a preferred embodiment of the invention, the second client device is a system server device that provides the service system and sends the electronic document. In this way, the second client device can act as a server for the service, providing an electronic document to the first client device through the signature server, and upon determining the compliance of the signature file received from the first client device during the verification process, the desired mobile service can be obtained by sending it to the second client device. In this case, for example, a bank's financial service can be accessed from the second client device, and the bank's financial services can be displayed in the service areas within the mobile application.

In a preferred embodiment of the invention, the verification process is configured to be recorded in the server memory unit, including a time stamp. In this way, if an error or inconsistency occurs in the processes carried out on the signature server, the analysis of the recorded verification process can be performed.

In a preferred embodiment of the invention, the second client device comprises a system memory unit configured to store one or more electronic signatures containing electronic certificates. In this way, when it is necessary to have signatures from both parties, the second client device can perform the processes carried out by the first client device and send the signed document back to the first client device.

### BRIEF DESCRIPTION OF THE FIGURES

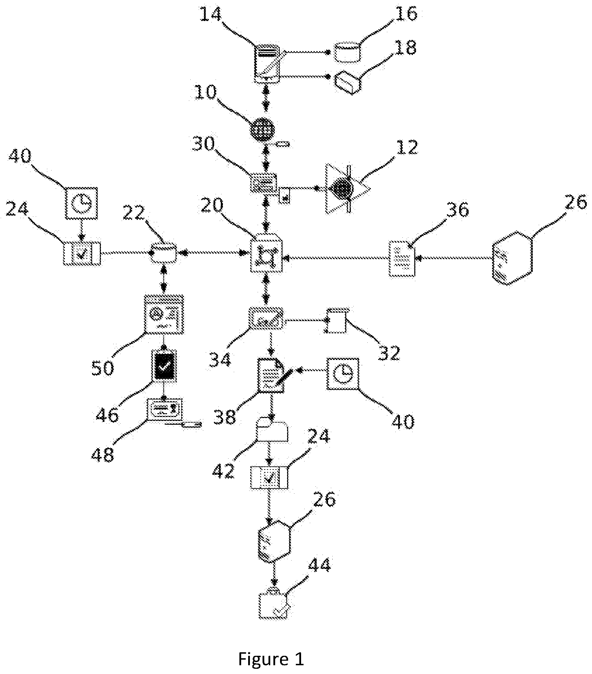

Figure 1 is a schematic illustration of a mobile electronic signature system according to the subject matter invention.

### DETAILED DESCRIPTION OF THE INVENTION

In this detailed explanation, the invention is explained without any limitation and only with reference to examples to better explain the subject matter.

Figure 1 schematically shows the subject matter of a mobile electronic signature system. In the mobile electronic signature system, the developed electronic signature system can be used by providing access to banking services from mobile devices. The mobile electronic signature system has a first client device (14) as a user. Here, the first client device (14) can be a mobile device, for example, a smartphone of a user who wants to access banking services. A mobile memory unit (16) and a processor unit (18) are interconnected to provide data flow on the first client device (14). In the mobile memory unit (16), incoming data, such as electronic certificates (32) received from a signature server (20), are stored in a manner that retains them. The processor unit (18) enables the reading and writing of data stored in the mobile memory unit (16). In this way, changes or adjustments can be made to the data. For example, a time stamp (40) can be added to the signed electronic document (38) containing an electronic certificate (32) on the first client device (14), and a signature file (42) can be created and sent to the signature server (20). The first client device (14) has a mobile application (30) installed, which provides access to the mobile electronic signature system of the invention. Here, the first client device (14) accesses one or more service systems (12) through an internet-enabled network server (10) with the mobile application (30). The service system (12) can be, for example, the system of banking services provided, and the first client device (14) can use these services in a service area. With the access of the first client device (14) to the service system (12) via the mobile application (30), at least one electronic signature (34) is transmitted from the signature server (20) to the device (14). An electronic signature (34) can contain one or more electronic certificates (32). Here, an electronic document (36) sent from a second client device (26) is transmitted to the first client device (14) via the signature server (20). The signature server (20) is a hardware server that provides the mobile infrastructure for the system of the invention. The signature server (20) includes a server memory unit (22) where one or more signature circuits (50) are registered. Access is provided to signature circulars (50) containing electronic signature permissions (46) suitable for signature certificates (48) registered in the server memory unit (22). The electronic document (36) can be, for example, a document in PDF format. In addition, the electronic document (36) can also be a bank instruction form, for example. Here, the second client device (26) is also a system server device where the service system (12) is provided. For example, the second client device (26) can be a system server of a bank finance system. The second client device (26) includes a system memory unit (28) where one or more electronic signatures (34) containing an electronic certificate (32) are stored. A signed electronic document (38) is created by adding the electronic signature (34) provided by the signature server (20) to the electronic document (36) received from the second client device (26) via the signature server (20) in the first client device (14). A signature file (42) is provided by adding a timestamp (40) to the signed electronic document (38) and includes the electronic certificate (32) provided with the electronic signature (34). The signature file (42) created in the interface of the mobile application (30) in the first client device (14) is sent to the second client device (26) through the mobile electronic signature system of the invention, but the signature file (42) first comes to the signature server (20) where content checks are performed. A verification process (24) is performed to ensure the content checks of the signature file (42) arrive at the signature server (20). During the verification process (24), identity checks are made to determine whether the signature file (42) is suitable for the electronic certificate (32), and if the accuracy is determined, identity approval is given. In addition, access is provided to signature circulars (50) recorded in the server memory unit (22), the electronic signature authority (46) in the signature file (42) is queried, and the validity of the electronic signature authority (46) is ensured if suitability is determined at the end of the query. Furthermore, a comparison is made between the electronic document (36) and the signed electronic document (38), for example, whether it is different from the original document or whether a change has been made in the electronic document (36) with the addition of the electronic signature (34), and if a specified error is not detected, the suitability of the verification process (24) is ensured, and the signature file (42) is sent from the signature server (20) to the second client device (26). Here, the verification process (24) is recorded in the server memory unit (22) of the signature server (20) with a time stamp. Thus, if an error or inconsistency occurs in the processes performed on the signature server (20), the recorded verification process (24) can be reviewed. For example, the security of the service in the mobile electronic signature system of the invention with the control of the signature server (20) in banking services is increased. When the signature file (42), whose suitability is determined in the verification process (24), reaches the second client device (26), a mobile service (44) is provided, and the desired service purchase on the system is completed.

### REFERENCE NUMBERS

| | | | |
|---|---|---|---|
| 10 | Network server | 32 | Electronic certificate |
| 12 | Service system | 34 | Electronic signature |
| 14 | First client device | 36 | Electronic document |
| 16 | mobile memory unit | 38 | Signed electronic document |
| 18 | Processor unit | 40 | Timestamp |
| 20 | Signature server | 42 | Signature file |
| 22 | Server memory unit | 44 | Mobile service |
| 24 | Confirmation process | 46 | Electronic signature authorization |
| 26 | Second client device | 48 | Signing certificate |
| 28 | System memory unit | 50 | Signature circular |
| 30 | Mobile application | | |

## Claims

1. A mobile electronic signature system comprising a first client device (14) with a mobile application (30) installed, which provides access to one or more service systems (12) via an internet-accessible network server (10); a signature server (20) that provides an electronic signature (34) containing one or more electronic certificates (32) transmitted to the first client device (14) when the first client device (14) accesses the service system (12); wherein an electronic document (36) sent from the second client device (26) is transmitted to the first client device (14) via the signature server (20); the signature server (20) configured to send a signature file (42) received from the first client device (14) to the second client device (26), after the signature file has been verified by the signature server; wherein the signature file (42) is created by the first client device (14) by adding a time stamp (40) to a signed electronic document (38), the signature file (42) including the one or more electronic certificate (32) provided with the electronic signature (34), and wherein the signed electronic document (38) is generated by the first client device (14) by adding the electronic signature (34) to the electronic document (36), wherein the signature server (20) is configured to verify the signature file (42) from the first client device (14) to provide appropriate identity verification according to the one or more electronic certificate (32), and to query an electronic signature authority (46) in the signature file (42) by accessing one or more signature circuits (50) containing electronic signature permissions (46) suitable for signature certificates (48) recorded in a server memory unit (22), and to conduct a verification process (24) that provides a query about the changes made in the signed electronic document (38) by comparing the electronic document (36) with the signed electronic document (38); and when the second client device (26) receives the signature file (42) from the signature server (20) upon determining the success at the verification process (24), a mobile service (44) is provided to the first client by the second client.

2. A mobile electronic signature system according to Claim 1, wherein the first client device (14) being a mobile device having a mobile memory unit (16) and a processing unit (18) connected to provide bidirectional data flow with the mobile memory unit (16).

3. A mobile electronic signature system according to Claim 2, wherein the mobile memory unit (16) being configured to store electronic certificates (32) received from the signature server (20) in the first client device (14).

4. A mobile electronic signature system according to Claim 2, wherein the processing unit (18) being configured to enable reading and writing of data in the mobile memory unit (16).

5. A mobile electronic signature system according to any one of the preceding claims, wherein the second client device (26) is being a system server device that provides the service system (12) and sends the electronic document (36).

6. A mobile electronic signature system according to any one of the preceding claims, wherein the verification process (24) is being configured to be recorded in the server memory unit (22), including a timestamp (40).

7. A mobile electronic signature system according to Claim 5, wherein the second client device (26) comprising a system memory unit (28) configured to store one or more electronic signatures (34) containing electronic certificates (32).

## Patentansprüche

1. Mobiles elektronisches Signatursystem, umfassend eine erste Client-Vorrichtung (14), auf der eine mobile Anwendung (30) installiert ist, welche über einen internetfähigen Netzwerkserver (10) Zugang zu einem oder mehreren Dienstsystemen (12) bereitstellt; einen Signaturserver (20), der eine elektronische Signatur (34) bereitstellt, die ein oder mehrere elektronische Zertifikate (32) enthält und an die erste Client-Vorrichtung (14) übertragen wird, wenn die erste Client-Vorrichtung (14) auf das Dienstsystem (12) zugreift; wobei ein von der zweiten Client-Vorrichtung (26) gesendetes elektronisches Dokument (36) über den Signaturserver (20) an die erste Client-Vorrichtung (14) übertragen wird; wobei der Signaturserver (20) dazu konfiguriert ist, eine von der ersten Client-Vorrichtung (14) empfangene Signaturdatei (42) an die zweite Client-Vorrichtung (26) zu senden, nachdem die Signaturdatei durch den Signaturserver verifiziert worden ist; wobei die Signaturdatei (42) von der ersten Client-Vorrichtung (14) durch Hinzufügen eines Zeitstempels (40) zu einem signierten elektronischen Dokument (38) erstellt wird, wobei die Signaturdatei (42) das eine oder die mehreren elektronischen Zertifikate (32) umfasst, die mit der elektronischen Signatur (34) bereitgestellt werden, und wobei das signierte elektronische Dokument (38) von der ersten Client-Vorrichtung (14) durch Hinzufügen der elektronischen Signatur (34) zu dem elektronischen Dokument (36) erzeugt wird, wobei der Signaturserver (20) dazu konfiguriert ist, die Signaturdatei (42) von der ersten Client-Vorrichtung (14) zu verifizieren, um eine geeignete Identitätsprüfung gemäß dem einen oder den mehreren elektronischen Zertifikaten (32) bereitzustellen, und eine elektronische Signaturberechtigung (46) in der Signaturdatei (42) abzufragen, indem auf ein oder mehrere Signaturzirkulare (50) zugegriffen wird, die elektronische Signaturberechtigungen (46) enthalten, welche den in einer Serverspeichereinheit (22) hinterlegten Signaturzertifikaten (48) entsprechen, und einen Verifizierungsvorgang (24) durchzuführen, der eine Abfrage bezüglich der in dem signierten elektronischen Dokument (38) vorgenommenen Änderungen bereitstellt, indem das elektronische Dokument (36) mit dem signierten elektronischen Dokument (38) verglichen wird; und wobei, wenn die zweite Client-Vorrichtung (26) die Signaturdatei (42) nach der Feststellung des erfolgreichen Verifizierungsvorgangs (24) von dem Signaturserver (20) empfängt, ein mobiler Dienst (44) von dem zweiten Client für den ersten Client bereitgestellt wird.

2. Mobiles elektronisches Signatursystem nach Anspruch 1, wobei die erste Client-Vorrichtung (14) eine mobile Vorrichtung ist, die eine mobile Speichereinheit (16) und eine Verarbeitungseinheit (18) aufweist, welche derart verbunden ist, dass ein bidirektionaler Datenfluss mit der mobilen Speichereinheit (16) bereitgestellt wird.

3. Mobiles elektronisches Signatursystem nach Anspruch 2, wobei die mobile Speichereinheit (16) dazu konfiguriert ist, in der ersten Client-Vorrichtung (14) die von dem Signaturserver (20) empfangenen elektronischen Zertifikate (32) zu speichern.

4. Mobiles elektronisches Signatursystem nach Anspruch 2, wobei die Verarbeitungseinheit (18) dazu konfiguriert ist, das Lesen und Schreiben von Daten in der mobilen Speichereinheit (16) zu ermöglichen.

5. Mobiles elektronisches Signatursystem nach einem der vorhergehenden Ansprüche, wobei die zweite Client-Vorrichtung (26) eine Systemservervorrichtung ist, die das Dienstsystem (12) bereitstellt und das elektronische Dokument (36) sendet.

6. Mobiles elektronisches Signatursystem nach einem der vorhergehenden Ansprüche, wobei der Verifizierungsvorgang (24) dazu konfiguriert ist, einschließlich eines Zeitstempels (40) in der Serverspeichereinheit (22) aufgezeichnet zu werden.

7. Mobiles elektronisches Signatursystem nach Anspruch 5, wobei die zweite Client-Vorrichtung (26) eine Systemspeichereinheit (28) umfasst, die dazu konfiguriert ist, eine oder mehrere elektronische Signaturen (34) zu speichern, die elektronische Zertifikate (32) enthalten.

## Revendications

1. Système de signature électronique mobile comprenant un premier dispositif client (14) sur lequel est installée une application mobile (30), laquelle fournit un accès à un ou plusieurs systèmes de service (12) par l'intermédiaire d'un serveur de réseau (10) accessible via internet ; un serveur de signature (20) qui fournit une signature électronique (34) contenant un ou plusieurs certificats électroniques (32) transmise au premier dispositif client (14) lorsque le premier dispositif client (14) accède au système de service (12) ; dans lequel un document électronique (36) envoyé depuis le second dispositif client (26) est transmis au premier dispositif client (14) par l'intermédiaire du serveur de signature (20) ; le serveur de signature (20) étant configuré pour envoyer un fichier de signature (42) reçu du premier dispositif client (14) au second dispositif client (26), après que le fichier de signature a été vérifié par le serveur de signature ; dans lequel le fichier de signature (42) est créé par le premier dispositif client (14) par l'ajout d'un horodatage (40) à un document électronique signé (38), le fichier de signature (42) comprenant le ou les certificats électroniques (32) fournis avec la signature électronique (34), et dans lequel le document électronique signé (38) est généré par le premier dispositif client (14) par l'ajout de la signature électronique (34) au document électronique (36), dans lequel le serveur de signature (20) est configuré pour vérifier le fichier de signature (42) provenant du premier dispositif client (14) afin de fournir une vérification d'identité appropriée en fonction du ou des certificats électroniques (32), et pour interroger un pouvoir de signature électronique (46) contenu dans le fichier de signature (42) en accédant à une ou plusieurs circulaires de signature (50) contenant les pouvoirs de signature électronique (46) correspondant aux certificats de signature (48) enregistrés dans une unité de mémoire du serveur (22), et pour conduire un processus de vérification (24) qui fournit une interrogation quant aux modifications apportées dans le document électronique signé (38) par comparaison du document électronique (36) avec le document électronique signé (38) ; et dans lequel, lorsque le second dispositif client (26) reçoit le fichier de signature (42) du serveur de signature (20) après détermination du succès du processus de vérification (24), un service mobile (44) est fourni au premier client par le second client.

2. Système de signature électronique mobile selon la revendication 1, dans lequel le premier dispositif client (14) est un dispositif mobile comportant une unité de mémoire mobile (16) et une unité de traitement (18) reliée de manière à assurer un flux de données bidirectionnel avec l'unité de mémoire mobile (16).

3. Système de signature électronique mobile selon la revendication 2, dans lequel l'unité de mémoire mobile (16) est configurée pour stocker, dans le premier dispositif client (14), les certificats électroniques (32) reçus du serveur de signature (20).

4. Système de signature électronique mobile selon la revendication 2, dans lequel l'unité de traitement (18) est configurée pour permettre la lecture et l'écriture de données dans l'unité de mémoire mobile (16).

5. Système de signature électronique mobile selon l'une quelconque des revendications précédentes, dans lequel le second dispositif client (26) est un dispositif serveur de système qui fournit le système de service (12) et envoie le document électronique (36).

6. Système de signature électronique mobile selon l'une quelconque des revendications précédentes, dans lequel le processus de vérification (24) est configuré pour être enregistré dans l'unité de mémoire du serveur (22), y compris un horodatage (40).

7. Système de signature électronique mobile selon la revendication 5, dans lequel le second dispositif client (26) comprend une unité de mémoire de système (28) configurée pour stocker une ou plusieurs signatures électroniques (34) contenant des certificats électroniques (32).
